# EUROPEAN PATENT SPECIFICATION

(11) **EP 2 055 625 B1**
(45) Date of publication and mention of the grant of the patent: **13.01.2010**
(21) Application number: 07254294.7
(22) Date of filing: 30.10.2007
(51) Int. Cl.: B62L 3/08

(54) **Disk brake device for an all-terrain vehicle**
Scheibenbremsvorrichtung für ein Geländefahrzeug
Dispositif de frein à disque pour véhicule tout terrain

(43) Date of publication of application: 06.05.2009
(73) Proprietor: Kwang Yang Motor Co., Ltd., Sanmin District Kaohsiung City (TW)
(72) Inventor: Shao, Chien-Neng, Kaohsiung Hsien (TW); Lee, Yen-Hsui, Tso-Ying Dist. Kaohsiung City (TW)
(74) Representative: Mounteney, Simon James

(56) References cited:
- EP-A- 1 520 763
- EP-A- 1 757 504
- JP-A- 9 249 179

## Description

This invention relates to a brake device, and more particularly to a disk brake device for an all-terrain vehicle.

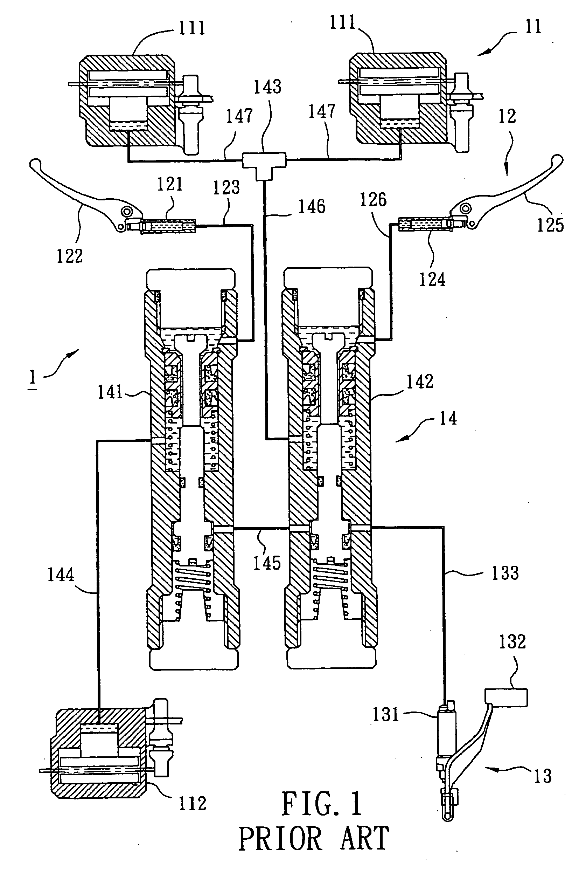

Referring to Fig. 1, a first conventional disk brake device 1 is adapted for stopping two front wheels and two rear wheels of an all-terrain vehicle, and includes a braking unit 11, a hand brake unit 12, a foot brake unit 13, and a control valve unit 14.

The braking unit 11 includes two front hydraulic cylinders 111 for stopping the front wheels, and a rear hydraulic cylinder 112 for stopping the rear wheel. The hand brake unit 12 includes a fist hydraulic cylinder 121, a first brake lever 122 operable to drive flow of oil in the first hydraulic cylinder 121, a first tube 123 in fluid communication with the first hydraulic cylinder 121, a second hydraulic cylinder 124, a second brake lever 125 operable to drive flow of oil in the second hydraulic cylinder 124, and a second tube 126 in fluid communication with the second hydraulic cylinder 124. The foot brake unit 13 includes a main cylinder 131, a brake pedal 132 operable to drive flow of oil in the main cylinder 131, and a foot-brake oil tube 133 in fluid communication with the main cylinder 131.

The control valve unit 14 includes a first control valve 141 in fluid communication with the first tube 123, a second control valve 142 in fluid communication with the second tube 126 and the foot-brake oil tube 133, a three-way tube 143, a rear tube 144 in fluid communication with the first control valve 141 and the rear hydraulic cylinder 112, a first connecting tube 145 in fluid communication with the fist and second control valves 141, 142, a second connecting tube 146 in fluid communication with the second control valve 142 and the three-way tube 143, and two front tubes 147 each in fluid communication with the three-way tube 143 and the corresponding front hydraulic cylinder 111.

When the first brake lever 122 is actuated, oil flows in the first hydraulic cylinder 121, the first tube 123, the fist control valve 141, the rear tube 144, and the rear hydraulic cylinder 112. Hence, the rear wheels are stopped.

When the second brake lever 125 is actuated, oil flows in the second hydraulic cylinder 124, the second tube 126, the second control valve 142, the second connecting tube 146, the three-way tube 143, the front tubes 147, and the front hydraulic cylinders 111. Hence, the front wheels are stopped.

When the brake pedal 132 is actuated, oil flows in the main cylinder 131, the foot-brake oil tube 133, and the second control valve 142. Subsequently, oil flows in a first path defined by the first connecting tube 145, the first control valve 141, the rear tube 144, and the rear hydraulic cylinder 112, and in a second path defined by the second connecting tube 146, the three-way tube 143, the front tubes 147, and the front hydraulic cylinders 111. Hence, the front and rear wheels are stopped.

The first conventional disk brake device 1 suffers from the following disadvantages:
(1) Due to the need for provision of two control valves (i.e., the control valves 141, 142), the first conventional disk brake device 1 is made at a high cost.
(2) When the brake pedal 132 malfunctions, to stop the front and rear wheels simultaneously, it is necessary to actuate both of the first and second brake levers 122, 125, thereby resulting in inconvenience during such urgent braking.

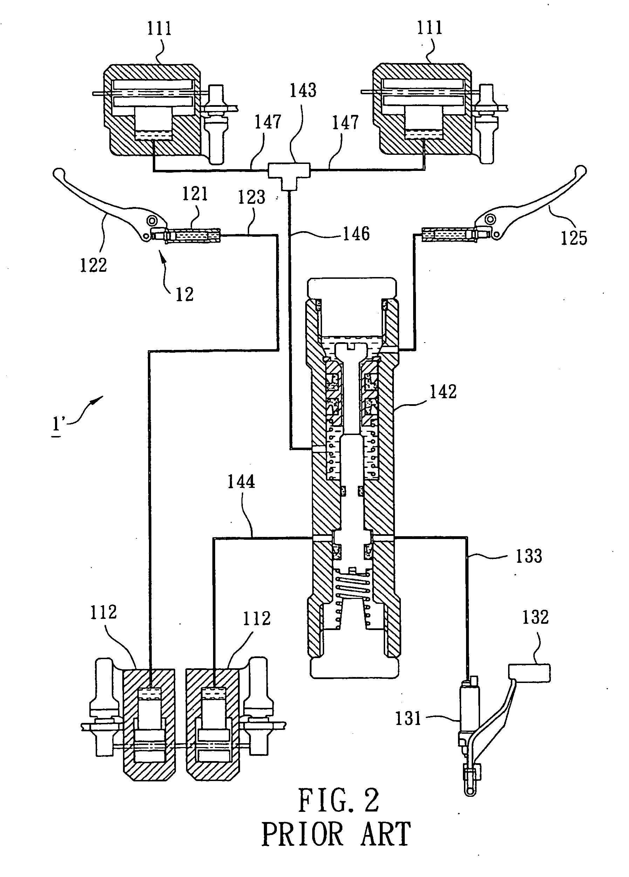

With further reference to Fig. 2, a second conventional disk brake device 1' is similar in construction to the first conventional disk device 1. In contrast to the first conventional disk brake device 1, the second conventional disk brake device 1' includes a single control valve 142 and two rear hydraulic cylinders 112. The first tube 123 is in fluid communication with the first hydraulic cylinder 121 and one of the rear hydraulic cylinders 112. When the brake pedal 132 is actuated, oil flows in the main cylinder 131, the foot-brake oil tube 133, and the control valve 142. Subsequently, oil flows in a first path defined by the rear tube 144 and the other of the rear hydraulic cylinders 112, and in a second path defined by the connecting tube 146, the three-way tube 143, the front tubes 147, and the front hydraulic cylinders 111. Hence, the front and rear wheels are stopped simultaneously.

The second conventional disk brake device 1' suffers from the following disadvantages:
(1) Due to the need for provision of two rear hydraulic cylinders (i.e., the rear hydraulic cylinders 112), the second conventional disk brake device 1' is made at a high cost.
(2) When the brake pedal 132 malfunctions, to stop the front and rear wheels simultaneously, it is necessary to actuate both of the first and second brake levers 122, 125, thereby resulting in inconvenience during such urgent braking.

The object of this invention is to provide a disk brake device for an all-terrain vehicle that includes two front wheels and two rear wheels, which can be stopped simultaneously by actuating either a brake lever or a brake pedal.

According to this invention, a disk brake device is used for stopping two front wheels and two rear wheels of an all-terrain vehicle. The disk bake device includes two front hydraulic cylinders for stopping the front wheels, a rear hydraulic cylinder for stopping the rear wheels, a control valve connected among the front and rear hydraulic cylinders, first and second bake levers, and a brake pedal. Either the first brake lever or the brake pedal is operable to stop the front and rear wheels simultaneously.

These and other features and advantages of this invention will become apparent in the following detailed description of the preferred embodiments of this invention, with reference to the accompanying drawings, in which:
Fig. 1 is a schematic view illustrating a first conventional disk brake device;
Fig. 2 is a schematic view illustrating a second conventional disk brake device;
Fig. 3 is a schematic view illustrating the first preferred embodiment of a disk brake device according to this invention;
Fig. 4 is schematic sectional view illustrating a modified flow-guiding member;
Fig. 5 is a schematic sectional view illustrating a modified flow separator;
Fig. 6 is a schematic view of the first preferred embodiment, illustrating flow of oil when a brake pedal is actuated;
Fig. 7 is a schematic view of the first preferred embodiment, illustrating flow of oil when a second brake lever is actuated; and
Fig. 8 is a schematic view illustrating the second preferred embodiment of a disk brake device according to this invention.

Before the present invention is described in greater detail in connection with the preferred embodiments, it should be noted that similar elements and structures are designated by like reference numerals throughout the entire disclosure.

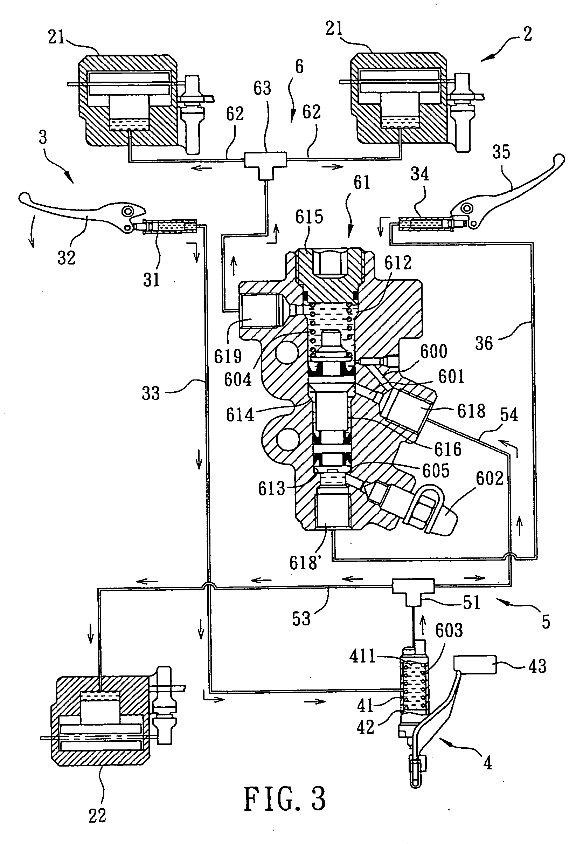

Referring to Fig. 3, the first preferred embodiment of a disk brake device according to this invention is adapted for stopping two front wheels and two rear wheels of an all-terrain vehicle. The disk brake device includes a braking unit 2, a hand brake unit 3, a foot brake unit 4, a rear passage unit 5, and a front passage unit 6.

The braking unit 2 includes two front hydraulic cylinders 21 for stopping the front wheels, respectively, and a rear hydraulic cylinder 22 for stopping the rear wheels.

The handle brake unit 3 includes a first hydraulic cylinder 31, a first brake lever 32 operable to drive flow of brake oil in the first hydraulic cylinder 31, a first oil tube 33 in fluid communication with the first hydraulic cylinder 31, a second hydraulic cylinder 34, a second brake lever 35 operable to drive flow of brake oil in the second hydraulic cylinder 34, and a second tube 36 in fluid communication with the second hydraulic cylinder 34.

The foot brake unit 4 includes a main cylinder 41, a piston unit 42 disposed movably in the main cylinder 41 and biased by a spring 603 to move in the main cylinder 41 in a direction for defining an oil chamber 411 in the main cylinder 41, and a brake pedal 43 operable to move the piston unit 42 in the main cylinder 41 in an opposite direction against the biasing action of the spring 603. The first oil tube 33 is in fluid communication with the oil chamber 411.

The rear passage unit 5 includes a flow-guiding member 51 in fluid communication with the oil chamber 411, a rear tube 53 in fluid communication with the flow-guiding member 51 and the rear hydraulic cylinder 22, and a branch tube 54 in fluid communication with the flow-guiding member 51.

The front passage unit 6 includes a control valve 61 in fluid communication with the branch tube 54, two front tubes 62 in fluid communication with the front hydraulic cylinders 21, respectively, and a flow separator 63 in fluid communication with the control valve 61 and the front tubes 62.

The control valve 61 includes front and rear chambers 612, 613 formed respectively in two opposite end portions thereof, a middle chamber 614 disposed between and in fluid communication with the front and rear chambers 612, 613, a sealing member 615 for closing an end of the front chamber 612, a movable rod 616 disposed movably in the front, rear, and middle chambers 612, 613, 614 in such a manner to prevent flow of oil between the front and rear chambers 612, 613, a first input portion 618 in fluid communication with the branch tube 54, a second input portion 618' in fluid communication with the second tube 36, and an output portion 619 in fluid communication with the flow separator 63. A spring 604 is disposed in the front chamber 612 for biasing the movable rod 616 to move into a diameter-reduced portion 605 of the rear chamber 613. The branch tube 54 is in fluid communication with the front chamber 612 via the first input portion 618 and a passageway 600, and with the middle chamber 614 via the first input portion 618 and another passageway 601. The second tube 36 is in fluid communication with the rear chamber 613 via the second input portion 618' . An air-drawing member 602 is mounted on the control valve 61 for drawing air therefrom prior to filling of oil.

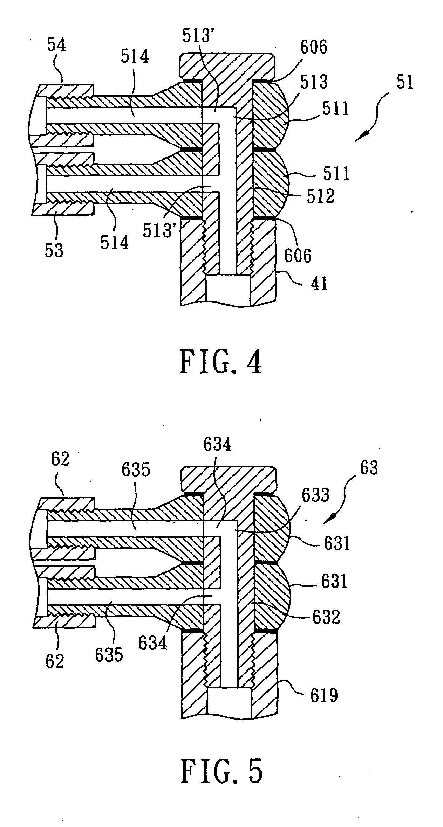

In this embodiment, each of the flow-guiding member 51 and the flow separator 63 is configured as a three-way tube. Referring to Fig. 4, the flow-guiding member 51 may be modified to include two joint bodies 511 overlapping each other, and a shaft body 512 extending through the joint bodies 511. The shaft body 512 has an end surface formed with an axially extending main passage 513 having an end in fluid communication with the main cylinder 41, and an annular surface formed with two radially extending branch passages 513' in fluid communication with the main passage 513. Each of the joint bodies 511 has a connecting passage 514 in fluid communication with the corresponding branch passage 513' and a corresponding one of the rear tube 53 and the branch tube 54. A plurality of oil seals 606 are disposed among the main cylinder 41, the joint bodies 511, and the shaft body 512 for preventing escape of oil therefrom through the gaps formed thereamong. Referring to Fig. 5, similarly, the flow separator 63 may be modified to include two joint bodies 631 overlapping each other, and a shaft body 632 extending through the joint bodies 631. The shaft body 632 has an end surface formed with an axially extending main passage 633 having an end in fluid communication with the output portion 619, and an annular surface formed with two radially extending branch passages 634 in fluid communication with the main passage 633. Each of the joint bodies 631 has a connecting passage 635 in fluid communication with the corresponding branch passage 634 and the corresponding front tube 62.

Referring again to Fig. 3, when the first brake lever 32 is actuated, oil flows in the first tube 33, the main cylinder 41, and the flow-guiding member 51. Subsequently, oil flows in a first path defined by the rear tube 53 and the rear hydraulic cylinder 22, and in a second path defined by the branch tube 54, the first input portion 618, the passageway 600, the front chamber 612, the output portion 619, the flow separator 63, the front tubes 62, and the front hydraulic cylinders 21. Hence, the front and rear wheels are stopped simultaneously.

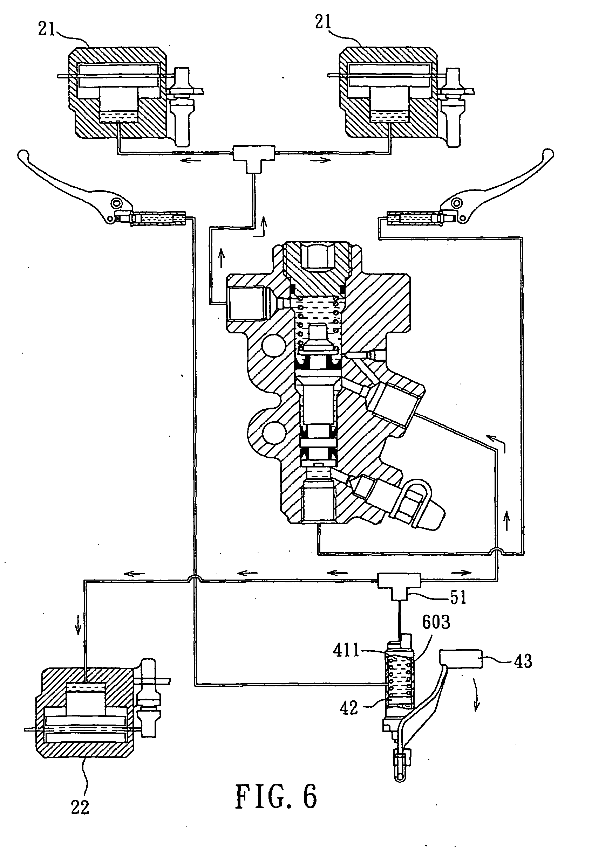

Referring to Fig. 6, when the brake pedal 43 is actuated, the piston unit 42 is moved in the main cylinder 41 against the biasing action of the spring 603 to drive flow of oil from the main cylinder 41 into the flow-guiding member 51. Subsequently, oil flows in the first and second paths. Hence, the front and rear wheels are stopped simultaneously.

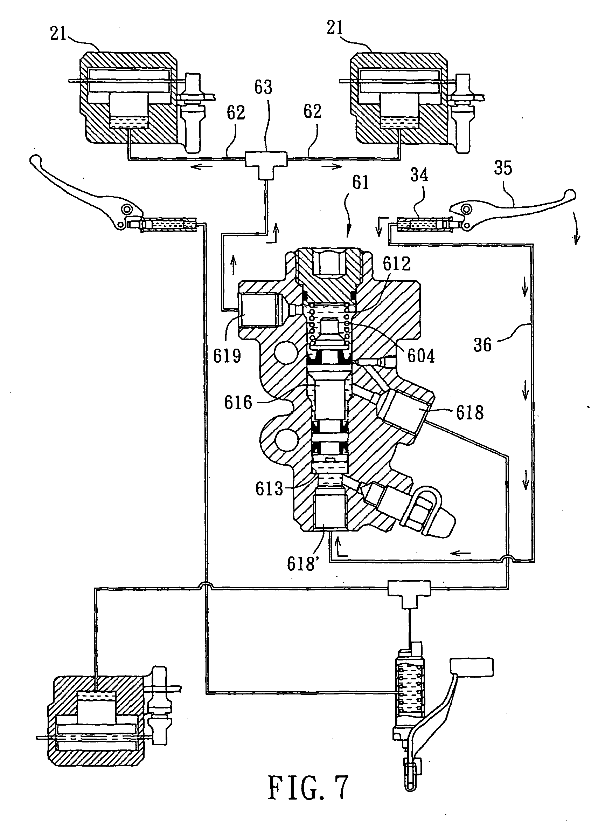

Referring to Fig. 7, when the second brake lever 35 is actuated, oil flows in the second tube 36, the second input portion 618', and into the rear chamber 613. Hence, the movable rod 616 is moved forwardly in the control valve 61 to reduce the volume of the front chamber 612 to thereby urge oil to flow in the front chamber 612, the output portion 619, the flow separator 63, the front tubes 62, and the front hydraulic cylinders 21. As a result, the front wheels are stopped.

In view of the above, the disk brake device of this invention has the following advantages:
(1) Since the disk brake device includes only a single control valve (i.e., the control valve 61) and a single rear hydraulic cylinder (i.e., the rear hydraulic cylinder 22), when compared to the first and second conventional disk brake devices 1, 1' (see Figs. 1 and 2), the manufacturing costs thereof are reduced.
(2) The front and rear wheels can be stopped simultaneously by actuating only the first brake lever 32 or the brake pedal 43. If one of the first brake lever 32 and the brake pedal 43 malfunctions, the other, non-malfunctioning one of the first brake lever 32 and the brake pedal 43 can be actuated to stop the front and rear wheels simultaneously.

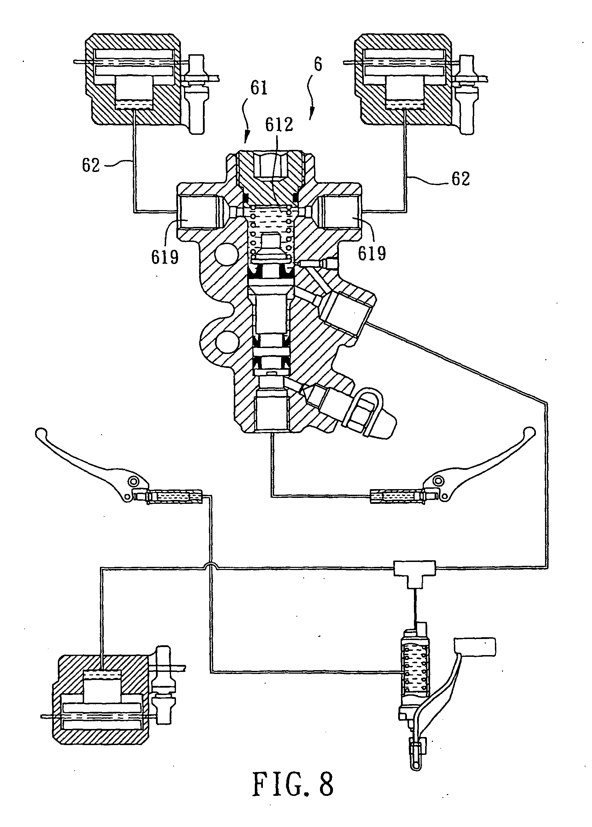

Fig. 8 shows the second preferred embodiment of a disk brake device according to this invention, which is similar in construction to the first preferred embodiment except that the control valve 61 has two output portions 619 in fluid communication with the front tubes 62, respectively.

## Claims

1. A disk brake device for stopping two front wheels and two rear wheels of an all-terrain vehicle, the disk brake device including:
a braking unit (2) including two front hydraulic cylinders (21) for stopping the front wheels, respectively, and a rear hydraulic cylinder (22) for stopping the rear wheels;
a hand brake unit (3) including a first hydraulic cylinder (31), a first brake lever (32) operable to drive flow of brake oil in the first hydraulic cylinder (31), a first oil tube (33) in fluid communication with the first hydraulic cylinder (31), a second hydraulic cylinder (34), a second brake lever (35) operable to drive flow of brake oil in the second hydraulic cylinder (34), and a second tube (36) in fluid communication with the second hydraulic cylinder (34);
a foot brake unit (4) including a main cylinder (41) , a piston unit (42) disposed movably in the main cylinder (41) for defining an oil chamber (411) in the main cylinder (41), and a brake pedal (43) operable to move the piston unit (42) relative to the main cylinder (41), the first oil tube (33) being in fluid communication with the oil chamber (411);
a rear passage unit (5) including a flow-guiding member (51) in fluid communication with the oil chamber (411) , a rear tube (53) in fluid communication with the flow-guiding member (51) and the rear hydraulic cylinder (22), and a branch tube (54) in fluid communication with the flow-guiding member (51); and
a front passage unit (6) including a control valve (61) in fluid communication with the branch tube (54), and two front tubes (62) in fluid communication with the front hydraulic cylinders (21), respectively, the control valve (61) including a first input portion (618) in fluid communication with the branch tube (54), a second input portion (618') in fluid communication with the second tube (36), and an output portion (619) in fluid communication with the front tubes (62).

2. The disk brake device as claimed in Claim 1, **characterized in that** the control valve (61) further includes front and rear chambers (612, 613) formed respectively in two opposite end portions thereof, a middle chamber (614) disposed between and in fluid communication with the front and rear chambers (612, 613), and a movable rod (616) disposed movably in the front, rear, and middle chambers (612, 613, 614) in such a manner to prevent flow of oil between the front and rear chambers (612, 613), the branch tube (54) being in fluid communication with the front chamber (612) via the first input portion (618), the second tube (36) being in fluid communication with the rear chamber (613) via the second input portion (618'), the front passage unit (6) further including a flow separator (63) in fluid communication with the output portion (619) and the front tubes (62).

3. The disk brake device as claimed in Claim 2, further **characterized in that** the flow-guiding member (51) is configured as a three-way tube.

4. The disk brake device as claimed in Claim 2, further **characterized in that** the flow separator (63) is configured as a three-way tube.

5. The disk brake device as claimed in Claim 1, **characterized in that** the flow-guiding member (51) includes two joint bodies (511) overlapping each other, and a shaft body (512) extending through the joint bodies (511), the shaft body (512) having an end surface formed with an axially extending main passage (513) having an end in fluid communication with the main cylinder (41), and an annular surface formed with two radially extending branch passages (513') in fluid communication with the main passage (513), each of the joint bodies (511) having a connecting passage (514) in fluid communication with a corresponding one of the branch passages (513') and a corresponding one of the rear tube (53) and the branch tube (54).

6. The disk brake device as claimed in Claim 2, further **characterized in that** the flow separator (63) includes two joint bodies (631) overlapping each other, and a shaft body (632) extending through the joint bodies (631), the shaft body (632) having an end surface formed with an axially extending main passage (633) having an end in fluid communication with the output portion (619), and an annular surface formed with two radially extending branch passages (634) in fluid communication with the main passage (633), each of the joint bodies (631) having a connecting passage (635) in fluid communication with a corresponding one of the branch passages (634) and a corresponding one of the front tubes (62).

7. The disk brake device as claimed in Claim 1, **characterized in that** the control valve (61) has two output portions (619) in fluid communication with the front tubes (62), respectively.

8. The disk brake device as claimed in Claim 7, further **characterized in that** the control valve (61) further includes front and rear chambers (612, 613) formed respectively in two opposite end portions thereof, a middle chamber (614) disposed between and in fluid communication with the front and rear chambers (612, 613) , and a movable rod (616) disposed movably in the front, rear, and middle chambers (612, 613, 614) in such a manner to prevent flow of oil between the front and rear chambers (612, 613), the branch tube (54) being in fluid communication with the front chamber (612) via the first input portion (618), the second tube (36) being in fluid communication with the rear chamber (613) via the second input portion (618'), the front tubes (62) being in fluid communication with the front chamber (612) via the output portions (619), respectively.

9. The disk brake device as claimed in Claim 8, further **characterized in that** the flow-guiding member (51) is configured as a three-way tube.

10. The disk brake device as claimed in Claim 8, further **characterized in that** the flow-guiding member (51) includes two joint bodies (511) overlapping each other, and a shaft body (512) extending through the joint bodies (511), the shaft body (512) having an end surface formed with an axially extending main passage (513) having an end in fluid communication with the main cylinder (41), and an annular surface formed with two radially extending branch passages (513') in fluid communication with the main passage (513), each of the joint bodies (511) having a connecting passage (514) in fluid communication with a corresponding one of the branch passages (513') and a corresponding one of the rear tube (53) and the branch tube (59).

## Patentansprüche

1. Scheibenbremsvorrichtung für das Stillsetzen der zwei Vorderräder und der zwei Hinterräder eines Geländefahrzeuges, wobei die Scheibenbremsvorrichtung umfasst:
eine Bremsanlage (2), die zwei vordere Hydraulikzylinder (21) jeweils für das Stillsetzen der Vorderräder und einen hinteren Hydraulikzylinder (22) für das Stillsetzen der Hinterräder umfasst;
eine Handbremsanlage (3), die umfasst; einen ersten Hydraulikzylinder (31); einen ersten Bremshebel (32), der funktionsfähig ist, um den Strom des Bremsöls im ersten Hydraulikzylinder (31) anzutreiben; ein erstes Ölrohr (33) in Fluidverbindung mit dem ersten Hydraulikzylinder (31); einen zweiten Hydraulikzylinder (34); einen zweiten Bremshebel (35), der funktionsfähig ist, um den Strom des Bremsöls im zweiten Hydraulikzylinder (34) anzutreiben; und ein zweites Rohr (36) in Fluidverbindung mit dem zweiten Hydraulikzylinder (34);
eine Fußbremsanlage (4), die umfasst: einen Hauptzylinder (41); eine Kolbenanlage (42), die beweglich im Hauptzylinder (41) für das Definieren einer Ölkammer (411) im Hauptzylinder (41) angeordnet ist; und ein Bremspedal (43), das funktionsfähig ist, um die Kolbenanlage (42) relativ zum Hauptzylinder (41) zu bewegen, wobei das erste Ölrohr (33) in Fluidverbindung mit der Ölkammer (411) ist;
eine hintere Durchflussanlage (5), die umfasst: ein Strömungsführungselement (51) in Fluidverbindung mit der Ölkammer (411); ein hinteres Rohr (53) in Fluidverbindung mit dem Strömungsführungselement (51) und dem hinteren Hydraulikzylinder (22); und ein Abzweigrohr (54) in Fluidverbindung mit dem Strömungsführungselement (51); und
eine vordere Durchflussanlage (6), die umfasst: ein Regelventil (61) in Fluidverbindung mit dem Abzweigrohr (54); und zwei vordere Rohre (62) in Fluidverbindung mit jeweils den vorderen Hydraulikzylindern (21), wobei das Regelventil (61) einen ersten Eingangsabschnitt (618) in Fluidverbindung mit dem Abzweigrohr (54), einen zweiten Eingangsabschnitt (618') in Fluidverbindung mit dem zweiten Rohr (36) und einen Ausgangsabschnitt (619) in Fluidverbindung mit den vorderen Rohren (62) umfasst.

2. Scheibenbremsvorrichtung nach Anspruch 1, **dadurch gekennzeichnet, dass** das Regelventil (61) außerdem umfasst: eine vordere und eine hintere Kammer (612, 613), die jeweils in zwei entgegengesetzten Endabschnitten davon gebildet werden; eine mittlere Kammer (614), die zwischen und in Fluidverbindung mit der vorderen und hinteren Kammer (612, 613) angeordnet ist; und eine bewegliche Stange (616), die beweglich in der vorderen, hinteren und mittleren Kammer (612, 613, 614) in einer derartigen Weise angeordnet ist, dass der Ölstrom zwischen der vorderen und der hinteren Kammer (612, 613) verhindert wird, wobei das Abzweigrohr (54) in Fluidverbindung mit der vorderen Kammer (612) über den ersten Eingangsabschnitt (618) ist, wobei das zweite Rohr (36) in Fluidverbindung mit der hinteren Kammer (613) über den zweiten Eingangsabschnitt (618') ist, wobei die vordere Durchflussanlage (6) außerdem eine Strömungstrenneinrichtung (63) in Fluidverbindung mit dem Ausgangsabschnitt (619) und den vorderen Rohren (62) umfasst.

3. Scheibenbremsvorrichtung nach Anspruch 2, außerdem **dadurch gekennzeichnet, dass** das Strörnungsfühmngselement (51) als ein Dreiwegerohr ausgebildet ist.

4. Scheibenbremsvorrichtung nach Anspruch 2, außerdem **dadurch gekennzeichnet, dass** die Strömungstrenneinrichtung (63) als ein Dreiwegerohr ausgebildet ist.

5. Scheibenbremsvorrichtung nach Anspruch 1, **dadurch gekennzeichnet, dass** das Strömungsführungselement (51) zwei Verbindungskörper (511), die einander überlappen, und einen Wellenkörper (512) umfasst, der sich durch die Verbindungskörper (511) erstreckt, wobei der Wellenkörper (512) eine Endfläche, die mit einem sich axial erstreckenden Hauptdurchgang (513) ausgebildet ist, der ein Ende in Fluidverbindung mit dem Hauptzylinder (41) aufweist, und eine ringförmige Fläche aufweist, die mit zwei sich radial erstreckenden Abzweigdurchgängen (513') in Fluidverbindung mit dem Hauptdurchgang (513) ausgebildet ist, wobei ein jeder der Verbindungskörper (511) einen Verbindungsdurchgang (514) in Fluidverbindung mit einem entsprechenden der Abzweigdurchgänge (513') und einem entsprechenden von hinterem Rohr (53) und Abzweigrohr (54) aufweist.

6. Scheibenbremsvorrichtung nach Anspruch 2, außerdem **dadurch gekennzeichnet, dass** die Strömungstrenneinrichtung (63) zwei Verbindungskörper (631), die einander überlappen, und einen Wellenkörper (632) umfasst, der sich durch die Verbindungskörper (631) erstreckt, wobei der Wellenkörper (632) eine Endfläche, die mit einem sich axial erstreckenden Hauptdurchgang (633) ausgebildet ist, der ein Ende in Fluidverbindung mit dem Ausgangsabschnitt (619) aufweist, und eine ringförmige Fläche aufweist, die mit zwei sich radial erstreckenden Abzweigdurchgängen (634) in Fluidverbindung mit dem Hauptdurchgang (633) ausgebildet ist, wobei ein jeder der Verbindungskörper (631) einen Verbindungsdurchgang (635) in Fluidverbindung mit einem entsprechenden der Abzweigdurchgänge (634) und einem entsprechenden der vorderen Rohre (62) aufweist.

7. Scheibenbremsvorrichtung nach Anspruch 1, **dadurch gekennzeichnet, dass** das Regelventil (61) zwei Ausgangsabschnitte (619) jeweils in Fluidverbindung mit den vorderen Rohren (62) aufweist.

8. Scheibenbremsvorrichtung nach Anspruch 7, außerdem **dadurch gekennzeichnet, dass** das Regelventil (61) außerdem umfasst: eine vordere und eine hintere Kammer (612, 613), die jeweils in zwei entgegengesetzten Endabschnitten davon gebildet werden; eine mittlere Kammer (614), die zwischen und in Fluidverbindung mit der vorderen und hinteren Kammer (612, 613) angeordnet ist; und eine bewegliche Stange (616), die beweglich in der vorderen, hinteren und mittleren Kammer (612, 613, 614) in einer derartigen Weise angeordnet ist, dass der Ölstrom zwischen der vorderen und der hinteren Kammer (612, 613) verhindert wird, wobei das Abzweigrohr (54) in Fluidverbindung mit der vorderen Kammer (612) über den ersten Eingangsabschnitt (618) ist, wobei das zweite Rohr (36) in Fluidverbindung mit der hinteren Kammer (613) über den zweiten Eingangsabschnitt (618') ist, wobei die vorderen Rohre (62) in Fluidverbindung mit der vorderen Kammer (612)jeweils über die Ausgangsabschnitte (619) sind. Scheibenbremsvorrichtung nach Anspruch 2, außerdem **dadurch gekennzeichnet, dass**

9. Scheibenbremsvorrichtung nach Anspruch 8, außerdem **dadurch gekennzeichnet, dass** das Strörnungsfühmngselement (51) als ein Dreiwegerohr ausgebildet ist.

10. Scheibenbremsvorrichtung nach Anspruch 8, außerdem **dadurch gekennzeichnet, dass** das Strömungsführungselement (51) zwei Verbindungskörper (511), die einander überlappen, und einen Wellenkörper (512) umfasst, der sich durch die Verbindungskörper (511) erstreckt, wobei der Wellenkörper (512) eine Endfläche, die mit einem sich axial erstreckenden Hauptdurchgang (513) ausgebildet ist, der ein Ende in Fluidverbindung mit dem Hauptzylinder (41) aufweist, und eine ringförmige Fläche aufweist, die mit zwei sich radial erstreckenden Abzweigdurchgängen (513') in Fluidverbindung mit dem Hauptdurchgang (513) ausgebildet ist, wobei ein jeder der Verbindungskörper (511) einen Verbindungsdurchgang (514) in in Fluidverbindung mit einem entsprechenden der Abzweigdurchgänge (513') und einem entsprechenden von hinterem Rohr (53) und Abzweigrohr (54) aufweist.

## Revendications

1. Dispositif de frein à disque pour arrêter deux roues avant et deux roues arrière d'un véhicule tout terrain, le dispositif de frein à disque englobant :
une unité de freinage (2) englobant deux cylindres hydrauliques avant (21) pour arrêter respectivement les roues avant, et un cylindre hydraulique arrière (22) pour arrêter les roues arrière ;
une unité de frein à main (3), englobant un premier cylindre hydraulique (31), un premier levier de frein (32) servant à entraîner un écoulement d'huile de frein dans le premier cylindre hydraulique (31); un premier tube d'huile (33), en communication de fluide avec le premier cylindre hydraulique (31), un deuxième cylindre hydraulique (34), un deuxième levier de frein (35), servant à entraîner un écoulement d'huile de frein dans le deuxième cylindre hydraulique (34), et un deuxième tube (36), en communication de fluide avec le deuxième cylindre hydraulique (34) ;
une unité de frein à pied (4), englobant un cylindre principal (41), une unité de piston (42) agencée de manière mobile dans le cylindre principal (41) pour définir une chambre d'huile (411) dans le cylindre principal (41), et une pédale de frein (43) servant à déplacer l'unité de piston (42) par rapport au cylindre principal (41), le premier tube d'huile (33) étant en communication de fluide avec la chambre d'huile (411);
une unité de passage arrière (5), englobant un élément de guidage de l'écoulement (51), en communication de fluide avec la chambre d'huile (411), un tube arrière (53), en communication de fluide avec l'élément de guidage de l'écoulement (51) et le cylindre hydraulique arrière (22), et un tube de dérivation (54), en communication de fluide avec l'élément de guidage de l'écoulement (51) ; et
une unité de passage avant (6), englobant une soupape de commande (61), en communication de fluide avec le tube de dérivation (54), et deux tubes avant (62), respectivement en communication de fluide avec les cylindres hydrauliques avant (21), la soupape de commande (61) englobant une première partie d'entrée (618), en communication de fluide avec le tube de dérivation (54), une deuxième partie d'entrée (618'), en communication de fluide avec le deuxième tube (36), et une partie de sortie (619), en communication de fluide avec les tubes avant (62).

2. Dispositif de frein à disque selon la revendication 1, **caractérisé en ce que** la soupape de commande (61) englobe en outre des chambres avant et arrière (612, 613), formées respectivement dans deux de ses parties d'extrémité opposées, une chambre centrale (614) agencée entre les chambres avant et arrière (612, 613) et en communication de fluide avec celles-ci, et une tige mobile (616) agencée de manière mobile dans les chambres avant, arrière et centrale (612, 613, 614), de sorte à empêcher un écoulement d'huile entre les chambres avant et arrière (612, 613), le tube de dérivation (54) étant en communication de fluide avec la chambre avant (612) via la première partie d'entrée (618), deuxième tube (36) étant en communication de fluide avec la chambre arrière (613) via la deuxième partie d'entrée (618'), l'unité de passage avant (6) englobant en outre un séparateur de l'écoulement (63), en communication de fluide avec la partie de sortie (619) et les tubes avait (62).

3. Dispositif de frein à disque selon la revendication 2, **caractérisé en outre en ce que** l'élément de guidage de l'écoulement (51) est configuré sous forme d'un tube à trois voies.

4. Dispositif de frein à disque selon la revendication 2, **caractérisé en outre en ce que** le séparateur de l'écoulement (63) est configure sous forme d'un tube à trois voies.

5. Dispositif de frein à disque selon la revendication 1, **caractérisé en ce que** l'élément de guidage de l'écoulement (51) englobe deux corps de joint (511) se chevauchant mutuellement, et un corps d'arbre (512) s'étendant à travers les corps de joint (511), le corps de l'arbre (512) comportant une surface d'extrémité sur laquelle est formé un passage principal à extension axiale (513), comportant une extrémité en communication de fluide avec le cylindre principal (41), et une surface annulaire sur laquelle sont formés deux passages de dérivation à extension radiale (513'), en communication de fluide avec le passage principal (513), chacun des corps de joint (511) comportant un passage de connexion (514), en communication de fluide avec un passage correspondant des passages de dérivation (513') et un tube correspondant, le tube arrière (53) ou le tube de dérivation (54).

6. Dispositif de frein à disque selon la revendication 2, **caractérisé en** coutre en ce que le séparateur de l'écoulement (63) englobe deux corps de joint (631), se chevauchant mutuellement, et un corps d'arbre (632) s'étendant à travers les corps de joint (631), le corps de l'arbre (632) comportant une surface d'extrémité sur laquelle est formé un passage principal à extension axiale (633), comportant une extrémité en communication de fluide avec la partie de sortie (619), et une surface annulaire sur laquelle sont formés deux passages de dérivation à extension radiale (634) en communication de fluide avec le passage principal (633), chacun des corps de joint (631) comportant un passage de connexion (635), en communication de fluide avec un passage correspondant des passages de dérivation (634) et un tube correspondant des tubes avant (62).

7. Dispositif de frein à disque selon la revendication 1, **caractérisé en ce que** la soupape de commande (61) comporte deux parties de sortie (619), respectivement en communication de fluide avec les tubes avant (62).

8. Dispositif de frein à disque selon la revendication 7, **caractérisé en outre en ce que** la soupape de commande (61) englobe en outre des chambres avant et arrière (612, 613) formées respectivement dans deux de ses parties d'extrémités opposées, une chambre centrale (614), agencée entre les chambres avant et arrière (612, 613) et en communication de fluide avec celles-ci, et une tige mobile (616) agencée de manière mobile dans les chambres avant, arrière et centrale (612, 613, 614) de sorte à empêcher un écoulement de l'huile entre les chambres avant et arrière (612, 613), le tube de dérivation (54) étant en communication de fluide avec la chambre avant (612) via la première partie d'entrée (618), le deuxième tube (36) étant en communication de fluide avec la chambre arrière (613) via la deuxième partie d'entrée (618'), les tubes avant (62) étant respectivement en communication de fluide avec la chambre avant (612) via les parties de sortie (619).

9. Dispositif de frein à disque selon la revendication 8, **caractérisé en outre en ce que** l'élément de guidage de l'écoulement (51) est configure sous forme d'un tube à trois voies.

10. Dispositif de frein à disque selon la revendication 8, **caractérisé en outre en ce que** l'élément de guidage de l'écoulement (51) englobe deux corps de joint (511) se chevauchant mutuellement, et un corps d'arbre (512) s'étendant à travers les corps de joint (511), le corps de l'arbre (512) comportant une surface d'extrémité sur laquelle est formé un passage principal à extension axiale (513), comportant une extrémité en communication de fluide avec le cylindre principal (41), et une surface annulaire sur laquelle sont formés deux passages de dérivation à extension radiale (513') en communication de fluide avec le passages principal (513), chacun des corps de joint (511) comportant un passage de connexion (514) en communication de fluide avec un passage correspondant des passages de dérivation (513') et un tube correspondant, le tube arrière (53) ou le tube de dérivation (54).
